# EUROPEAN PATENT APPLICATION

(11) **EP 1 923 693 A1**
(43) Date of publication of application: **21.05.2008**
(21) Application number: 07120735.1
(22) Date of filing: 14.11.2007
(51) Int. Cl.: G01N 21/39, G01N 21/77, G02B 6/26

(54) **Apparatus and method for chemical and biological sensing**

(30) Priority: 16.11.2006 US 600386
(71) Applicant: Honeywell International Inc., Morristown, NJ 07962 (US)
(72) Inventor: Sanders, Glen A., Scottsdale, AZ 85255 (US); Narayanan, Chellappan, Phoenix, AZ 85086 (US)
(74) Representative: Buckley, Guy Julian

(57) **Abstract**

Apparatus and method are provided for chemical and biological agent sensing. The sensing apparatus includes a resonator having a resonance frequency and one or more optical fiber coils. The optical fiber coil has a permeable cladding and an indicator embedded in the cladding that reacts to an agent (e.g., a chemical or biological substance). The resonator circulates light through the coil and produces a resonance shape centered at the resonance frequency and measured via the input light. A predetermined change in the resonance shape indicates a presence of the agent in the environment.

## Description

### FIELD OF THE INVENTION

The present invention generally relates to environment sensing, and more particularly relates to optical-based systems and methods for detecting the presence of a specific material.

### BACKGROUND OF THE INVENTION

In recent times, greater emphasis has been placed on national home security and detecting threats to populations. In particular, detecting or sensing the presence of undesired chemicals or biological material in the environment has become a priority, and a variety of detection devices have been developed in response thereto. One example of a chemical sensor is a sensor with a multi-mode optical fiber having a core and a cladding. The cladding, or coating on the cladding, has optical properties which are altered in the presence of a pre-determined material to be detected. The light transmitted through the core of the optical fiber is a function of the change in optical properties of the cladding or coating interacting with the material to be detected.

One design consideration for conventional detection devices is with sensitivity. By detecting the presence of lower concentration levels of undesired materials, an appropriate response may be timely performed. For a particular detection device, more time is generally required to detect the presence of undesired materials at lower concentration levels.

Accordingly, it is desirable to provide a sensor for detecting the presence of chemical and/or biological agents with enhanced sensitivity while minimizing the detection time. In addition, it is desirable to provide a sensor for detecting the presence of multiple and different threats while minimizing the package size of the sensor. Furthermore, other desirable features and characteristics of the present invention will become apparent from the subsequent detailed description of the invention and the appended claims, taken in conjunction with the accompanying drawings and this background of the invention.

### BRIEF SUMMARY OF THE INVENTION

Apparatus and method are provided for sensing one or more agents in an environment. In one exemplary embodiment, an apparatus for sensing an agent in an environment is provided comprising a resonator having a resonance frequency and comprising an optical fiber coil, the optical fiber coil comprising a cladding and an indicator embedded in the cladding. The indicator is configured to react to a first agent of the one or more agents. The resonator is configured to circulate an input light through the first coil and produce a resonance shape centered at the resonance frequency and measured via the input light. A predetermined change in the resonance shape indicates a presence of the first agent in the environment.

In another exemplary embodiment, an apparatus for sensing one or more agents in an environment is provided comprising a multiplexer and one or more resonators coupled to the multiplexer. The multiplexer is configured to receive a first light beam and produce one or more input light beams from the first light beam. Each of the one or more resonators comprises an optical fiber coil. Each of the one or more resonators is configured to circulate an input light beam through an optical fiber coil and produce a resonance shape from a circulating light beam. The circulating light beam is derived from the first input light beam circulating through the first optical fiber coil. A predetermined change in the resonance shape indicates a presence of one of the agents in the environment.

In another exemplary embodiment, a method for sensing one or more agents in an environment is provided comprising the steps of circulating an input light beam through at least one fiber resonator having an indicator incorporated therein, producing a resonance shape from a circulating light beam, and detecting a predetermined change in the resonance shape. The indicator is configured to react with one of the one or more agents. The circulating light beam is derived from the input light beam. The predetermined change indicates a presence of the first agent in the environment.

### BRIEF DESCRIPTION OF THE DRAWINGS

The present invention will hereinafter be described in conjunction with the following drawing figures, wherein like numerals denote like elements, and

FIG. 1 is a schematic diagram of a chemical/biological agent sensor in accordance with an exemplary embodiment of the present invention;

FIG. 2 is a schematic diagram of a chemical/biological agent sensor having a linear resonator in accordance with another exemplary embodiment of the present invention;

FIG. 3 is a schematic diagram of a chemical/biological agent sensor having a ring resonator in accordance with another exemplary embodiment of the present invention;

FIG. 4 is a schematic diagram of a multiplexed chemical/biological agent sensor in accordance with an exemplary embodiment of the present invention; and

FIG. 5 is a flow diagram of a method for sensing one or more chemical/biological agents in an environment in accordance with an exemplary embodiment of the present invention.

### DETAILED DESCRIPTION OF THE INVENTION

The following detailed description of the invention is merely exemplary in nature and is not intended to limit the invention or the application and uses of the invention. Furthermore, there is no intention to be bound by any theory presented in the preceding background of the invention or the following detailed description of the invention.

Apparatus and method are provided for sensing one or more chemical/biological agents in an environment. In general, the apparatus comprises a resonator having an optical fiber coil embedded with an indicator that reacts to a predetermined chemical/biological agent. When an input light beam (e.g., from a light source) is supplied to the resonator and the input light beam is tuned to the resonance frequency of the optical fiber coil in one direction (e.g., a clockwise or a counter-clockwise direction of the optical fiber coil in the case of a ring resonator), a resonance lineshape is produced in the region of the resonance frequency, which is sensed by the light circulating through the resonator. With the agent to be detected absent from the environment, the resonance lineshape has a narrow profile corresponding to a low energy loss of the light circulating in the resonator. With the presence of the predetermined chemical/biological agent in the environment of the optical fiber coil, the indicator reacts with this agent and, as a result, a portion of the light circulating in the optical fiber coil is scattered or absorbed. The normally narrow, resonance lineshape changes to a wider, shallower profile. This change in resonance lineshape represents a greater energy loss resulting from the scattered light or absorbed light and thus, indicates the presence of the predetermined chemical/biological agent. Multiple optical fiber coils may be multiplexed together in the sensor to form multiple resonators for simultaneous detection of the presence of multiple chemical/biological agents. The additional resonators may also be used to sense other secondary materials whose presence may adversely bias the measurement of the primary material that is intended to be detected. In this way, cross-sensitivities of one resonator coil or indicator to a secondary material may be reduced or eliminated.

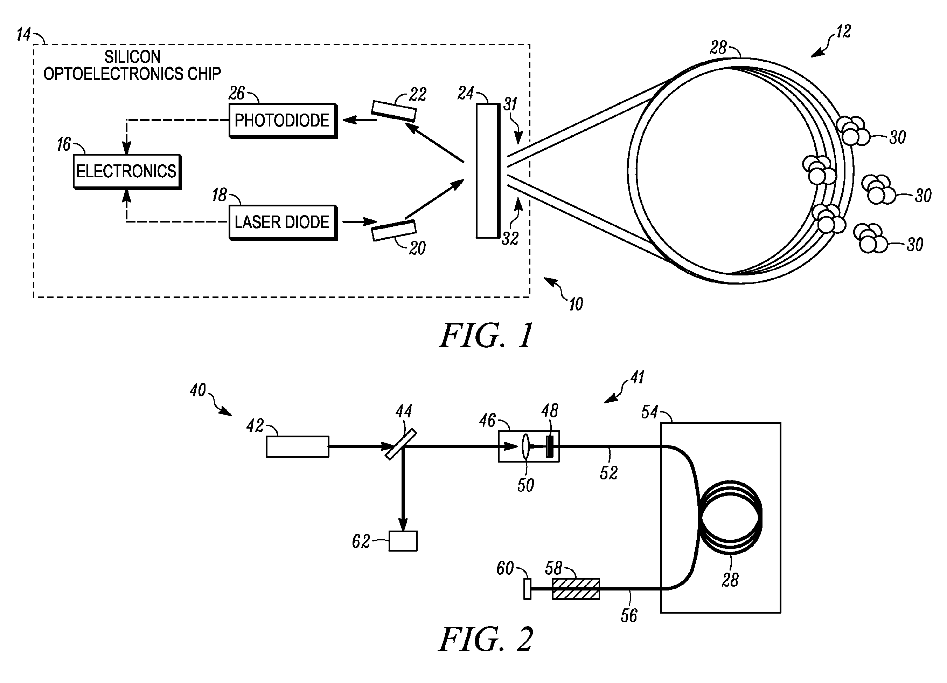

Referring now to the drawings, FIG. 1 is a schematic diagram of a chemical/biological agent sensor 10 in accordance with an exemplary embodiment of the present invention. The sensor 10 comprises a tunable light source 18 (e.g., a laser diode), a first mirror reflector 20, a recirculator 24 (e.g., a highly reflective mirror with low, but non-zero transmittance), an optical fiber coil 28 having a first end 31 receiving light from the light source 18 via the first mirror reflector 20 and recirculator 24, a second mirror reflector 22 receiving a light output from a second end of the optical fiber coil 28 via the recirculator 24, a photodetector (e.g., a photodiode) 26, and an electronics module 16 coupled to the photodetector 26 and the light source 18. The recirculator 24 and optical fiber coil 28 together form a resonator 12. The resonator may have a variety of configurations, and some exemplary embodiments are described herein. The light introduced to the resonator 12 is monochromatic and circulates through multiple turns of the optical fiber coil 28 and for multiple passes through the coil using the recirculator 24. A light output from the resonator 12 is responsive to the absence/presence of a predetermined chemical/biological agent 30.

In an exemplary embodiment, the light source 18 is a tunable laser having frequency stability, substantially narrow line width, and relatively high power capability. The light source 18 is tuned through a frequency region containing a frequency f₀ that corresponds with the resonance frequency in either the clockwise (CW) or counter-clockwise (CCW) direction of light propagation through the optical fiber coil 28. In general, the recirculator 24 may be any optical element that reintroduces light emerging from one end of the optical fiber coil 28 into the other end of the fiber coil 28, thus causing light to propagate through the optical fiber coil 28 many times. The use of an input mirror instead of a fiber optic coupler for the recirculator 24 is one advantage of the sensor 10 since the mirror may be used to attenuate polarization errors and other error mechanisms, and may introduce fewer imperfections. However, a fiber optic coupler may be suitable in some applications.

In one case, the optical fiber coil 28 is made of fiber whose core is typically glass-based with a cladding surrounding the core that is typically polymer-based, and an indicator embedded in the cladding that reacts to a predetermined chemical/biological agent 30. Another type of fiber includes a glass core, a cladding of photonic crystalline structure, and an outer polymer-based cladding. In this type of fiber, the indicator is contained within the outer cladding. In either case, an optical fiber having an extremely low bend loss is preferably used, and the optical fiber coil 28 preferably has a relatively large number of turns about a substantially small area. For example, the coil 28 may have from about 20-40 turns of the optical fiber about a one centimeter diameter. Generally, the longer the optical path, such as provided by the optical fiber coil 28, the greater the signal-to-noise ratio of the sensor 10. To improve the signal-to-noise ratio of the sensor 10, the optical path may be increased by increasing the number of turns of the optical fiber coil 10. In the optical fiber coil 28, light introduced by the recirculator 24 traverses mostly inside the glass, and only about a few percent of the optical energy of light is contained in the glass within the polymer cladding section of the optical fiber. The indicator may be a chemical or other substance that reacts to one or more chemical/biological substances (e.g., hydrogen sulfide, cyanide, chlorine, nerve agents, serin, and the like) and changes optical characteristics, for example color, optical loss, index of refraction, or the like inside the polymer cladding. The polymer cladding is preferably made to be permeable to the substance being detected.

In operation, light produced by the light source 18 is directed to the first mirror reflector 20 which in turn directs this light to the recirculator 24. Light from the first mirror reflector 20 that is scanned through the resonance frequency of the resonator 12 in a corresponding direction (e.g., the clockwise direction) of propagation, a first portion of which is transmitted through the recirculator 24 and into the first end 31 of the optical fiber coil 28. A second portion (i.e., the reflected portion) is reflected from the recirculator 12 to the second mirror reflector 22. The resonance frequencies for each of the CW and CCW paths through the optical fiber coil 28 are based on a constructive interference of successively circulated beams in each optical path. After the first portion of light propagates through the core of the optical fiber coil 28, the light emerges from the second end 32 of the optical fiber coil 28. In this exemplary embodiment, the light emerging from the second end 32 is directed to the recirculator 24. A portion of this light is reflected back into the first end 31 by the recirculator 24 while another portion is transmitted (i.e., the transmitted wave) by the recirculator 24 to the second mirror reflector 22. The transmitted wave is a fraction of, and derived from, the recirculating light wave inside the resonator 12. The transmitted wave and the reflected wave are directed, via the second mirror reflector 22, to the photodetector 26 where these waves are interfered. As the frequency of the light is detuned away from the resonance, the transmitted portion becomes very small and only the reflected portion impinges on the photodetector 26, indicating a maximum intensity with very little destructive interference. As the frequency of the light is scanned through the center of the resonance, the transmitted wave is maximized to produce a maximum destructive interference with the reflected wave, and thus providing a resonance dip having a minima that is indicative of the resonance center.

To observe the resonance center-frequency of the resonator 12, in either the CW direction or CCW direction, the intensity at the photodetector 26 may be measured or a standard synchronous detection technique may be used. In the case of synchronous detection, the input light beam is sinusoidally phase-modulated, and therefore frequency modulated at a frequency (fₘ) to dither the input beam frequency across a resonance lineshape as measured by the photodetector 26. For example, the electronic module 16 coupled to the photodetector 26 may demodulate the output of the photodetector 26 at fₘ to measure the resonance center indicated by the light output of the circulating light beam. At a line center of the resonance lineshape, or the resonance center, the photodetector 26 detects a minimum output at the fundamental detection frequency fₘ and detects a maximum on either side of the lineshape where the slope of the lineshape is greatest.

When the resonator is off-resonance, an intensity signal maximum is observed, but the signal at fₘ is substantially zero. To observe the linewidth of the resonance lineshape, the light source 18 frequency is scanned such that the light intensity signal on the photodetector 26 goes through at least a sequence of observing a half maximum, then the minimum, then another half maximum, all as the light source 18 frequency is scanned monotonically. Alternatively, a second measure of the lineshape width may be measured by monitoring the frequency difference between maxima of the demodulated signal at fₘ, as the light source 18 frequency is scanned montonically. In this case, a measurement of the frequency width of the resonance between points of highest slope is proportional to the resonator linewidth, and thus proportional to the loss of the resonator. The light source 18 frequency excursion from half-maximum to half maximum (e.g., between points of highest slope) is the resonator linewidth (e.g., proportional to the resonator linewidth), which is indicative of the loss within the fiber coil 28, and hence, a measure of the presence of the chemical agent or chemical substance or biological substance. Widening of the linewidth represents the presence of the chemical agent or subject substance.

The light source 18 frequency excursion is measured by recording the light source 18 frequency difference between the time that the photodetector 26 observes on half-maximum signal and the time the photodetector 26 observes the second half-maximum signal. The light source 18 frequency at each of those two points in time may be measured directly or indirectly. One example of direct measurement involves beating the light source 18 frequency with another light source that is not being scanned and measuring the beat frequency difference between the two points in time. An example of indirect measurement, which may be less expensive, is to pre-calibrate the light source 18 frequency versus the electrical signal input used to scan the light source 18. Using a laser for the light source 18, this may be a current drive signal that changes the injection current of the laser, a current drive signal to a thermo-electric cooler that changes the temperature of the laser, or a voltage drive signal to a piezoelectric transducer that changes the pathlength of the laser cavity to change the laser frequency. In these cases, the laser frequency shift versus the drive signal can be factory-calibrated, and then the drive signal excursion is a measure of frequency excursion during operation.

When f₀ is tuned away from the resonance frequency of the resonator 12 in the CW direction, for example, the energy from the CW beam does not enter the optical fiber and the light is reflected off the highly reflective mirror of the recirculator 24 to produce a maximum intensity at the photodetector 26. When f₀ is tuned at the resonance frequency of the resonator 12 in the CW direction, the CW beam enters the optical fiber coil 28, and the light striking the photodetector 26 has a minimum output thereby indicating the resonance center. Similarly, if light were injected (not shown) in the CCW direction, the CCW beam would enter the optical fiber coil 28 when the CCW beam is tuned to the resonance frequency of the resonator 12 in the CCW direction. One advantage of propagating light in both directions may be to add redundancy, and therefore fault tolerance, in case of, for example, laser diode failure of photodetector failure.

When the chemical/biological agent 30 is in the presence of the optical fiber coil 28, the indicator embedded in the cladding of the optical fiber coil 28 reacts (e.g., binds) with the chemical/biological agent 30 and alters the optical properties of the optical fiber coil 28. For example, the altered optical properties of the optical fiber coil 28 include, but are not necessarily limited to, a change in the index of refraction or an increase or decrease in the optical absorbance or fluorescence of the optical fiber coil 28.

In an exemplary embodiment, the sensor 10 is constructed on a silicon-based micro-optical bench 14 that integrates electronics (e.g., the electronic module 16) and optics and provides an efficient and expedient interface between the two. Miniature optical components having a feature size of as little as 10 microns, such as the mirror reflectors 20, 22, and the recirculator 24, may be mounted on silicon surfaces to eliminate large bulk optics, even though the light wave may be traveling in free space. Some of these optical functions may also be embedded in waveguides residing in the silicon material. In this exemplary embodiment, the light source 18 and related frequency tuning components and the photodetector 26 may also be mounted on the optical bench. The use of these techniques allows the fabrication of optics in or on a silicon platform and thus integrated with the electronics.

The light source 18 may be a compound structure having several components that may be mounted or formed on the micro-optical bench 14. For example, the light source 18 may be an external cavity laser diode placed between two reflective surface that are either formed or placed on the substrate of the micro-optical bench 14. Additionally, frequency-selective intra-cavity elements may be formed or placed within the laser diode cavity to produce a single frequency laser, such as a grating or an etalon. Additionally, elements may be included with the light source 18 that are mounted or formed external to the laser cavity, to shape or collimate the laser beam, such as one or more lenses.

FIG. 2 is a schematic diagram of a chemical/biological agent sensor 40 having a linear resonator 41 in accordance with another exemplary embodiment of the present invention. The sensor 40 comprises a tunable laser (e.g., an He-Ne laser or an external cavity laser diode) 42 that synthesizes an input light beam and introduces the input light beam into the linear resonator 41. The sensor 40 comprises a beam splitter (e.g., a 50-50% beam splitter) 44, an input element 46, the optical fiber coil 28, an output mirror 60, and a photodetector 62. The beam splitter 44 may be used for multiplexing the input light beam to multiple resonators in another embodiment. The input element 46 includes, but is not necessarily limited to, an input mirror 48 (e.g., a 95-5% mirror) although a fiber grating may be substituted for the input mirror 48. Additionally, the input element 46 may include optics 50 for directing the light from the beam splitter 44 to a first end 52 of the optical fiber coil 28 and for directing light from the same end 52 of the optical fiber coil 28 to the beam splitter 44. The optical fiber coil 28 is housed in a permeable package 54 (e.g., a permeable outer cladding) for detecting the predetermined chemical/biological agent (e.g., associated with the indicator embedded in the optical fiber coil 28). The reflector 48, fiber coil 28, and reflector 60 together form the linear resonator 41. The mirrors 48 and 60 may be formed or deposited directly on the fiber tips or fiber ends 52 and 56 to achieve a low loss resonator.

A modulator (e.g., a piezoelectric transducer) 58 may be coupled to the optical fiber coil 28 to modulate the pathlength of the light (e.g., sinusoidal modulation) circulating through the optical fiber coil 28 during resonance linewidth determination so that synchronous detection may be used. For example, the input light beam produced by the laser 42 is scanned through the resonance frequency f₀ or the resonator 41 and the modulator 58 sinusoidally modulates the pathlength of the light circulating through the optical fiber coil 28. In another exemplary embodiment, the modulator 58 is omitted when the laser 42 has frequency modulation capabilities incorporated therewith. In another exemplary embodiment, the laser frequency is fixed, and both the frequency scanning and the modulation are implemented by the modulator 58. In the latter case, the resonator resonance frequency is scanned through the region of the laser frequency, which is equivalent in principle to scanning the laser frequency across a fixed resonance frequency of the resonator 41.

The input light beam from the laser 42 is directed by the beam splitter 44 to the input element 46 which directs the input light beam to the first end 52 of the optical fiber coil 28. When tuned to the resonance frequency associated with the resonator 41, a majority of the input light beam enters the optical fiber coil 28. After propagating through the optical fiber coil 28, light emerges from the second end 56 of the optical fiber coil 28 and impinges on the output mirror 60 which reflects the light back into the optical fiber coil 28 at the second end 56. A light output is produced from the light propagating back and forth in the optical fiber coil 28 at the first end 52 of the optical fiber coil 28 which is directed by the input element 46 to the beam splitter 44. The beam splitter 44 reflects a portion of the light output to the photodetector 62, which may be coupled to electronics, such as the electronics 16 shown in FIG. 1.

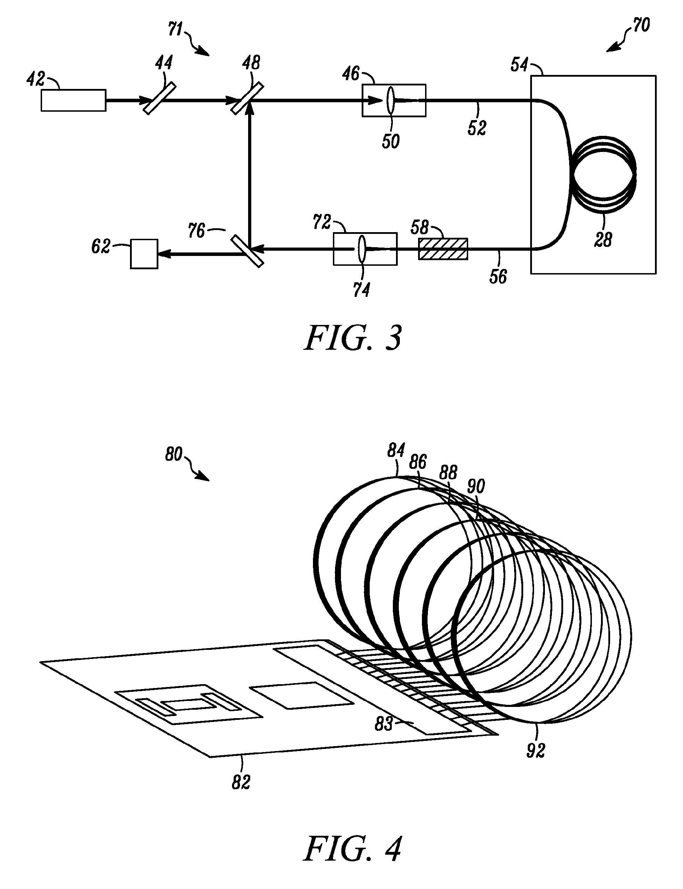

FIG. 3 is a schematic diagram of a chemical/biological agent sensor 70 having a ring resonator 71 in accordance with another exemplary embodiment of the present invention. In this exemplary embodiment, the laser 42 introduces the input light beam into the ring resonator 71. The chemical/biological sensor 70 comprises the laser 42, the beam splitter 44, the input mirror 48, an input element 46, the optical fiber coil 28, an output element 72, an output mirror 76, and a photodetector 62. The optical fiber coil 28 is housed in the permeable or semi-open package 54, and the modulator (e.g., a piezoelectric transducer) 58 may be coupled to the optical fiber coil 28 to modulate the light path (e.g., sinusoidal modulation and/or resonance frequency scanning) circulating through the optical fiber coil 28 during resonance linewidth determination. Mirrors 48 and 76, optical fiber coil 28, input element 46, and output element 72 together form the resonator 71. In one embodiment, mirrors 48 and 76 have sufficient curvature such that input element 46 and output element 72 may be omitted. In another embodiment, mirrors 48 and 76, input element 46, and output element 72 are replaced with one or more fiber optic couplers spliced to the optical fiber coil 28.

The input light beam from the laser 42 is directed to the input mirror 48 which transmits a portion of the input light beam to the input element 46. The input element 46 directs light from the input mirror 48 to the first end 52 of the optical fiber coil 28. When tuned to the resonance frequency of the resonator 71, a majority of the input light beam enters the first end 52 of the optical fiber coil 28. After propagating through the optical fiber coil 28, light emerges from the second end 56 of the optical fiber coil 28 and is directed to the output element 72. The output element 72 may include optics 74 for directing light from the second end 56 of the optical fiber coil 28 to the output mirror 76. The output mirror 76 reflects the light from the output element 72 to the input mirror 48, and input mirror 48 directs a majority of this to the input element 46 to complete the resonator 71 optical path. A light output is produced from the light circulating around the optical path, including the optical fiber coil 28, at the output mirror 76 which passes a relatively small fraction of the light circulating within the resonator 71 to the photodetector 62.

FIG. 4 is a schematic diagram of a multiplexed chemical/biological agent sensor 80 in accordance with another exemplary embodiment of the present invention. The sensor 80 comprises a silicon-based micro-optical bench 82 and a multiple optical fiber coils 84, 86, 88, 90, 92 coupled to the micro-optical bench 82. The micro-optical bench 82 integrates electronics (e.g., the electronics module 16 shown in FIG. 1) and optics (e.g., the beam splitter 44, input and output mirrors 48, 60, 76, input and output elements 46, 72, and photodetector 62 shown in FIGS. 2 and 3). For example, the electronics module 16, photodetector 26, light source 18, mirror reflectors 20, 22, and input mirror 24 shown in FIG. 1 may be integrated with the micro-optical bench 82. The sensor 80 additionally includes, but is not necessarily limited to, a multiplexer 83 formed on the micro-optical bench 82 that is coupled (e.g., via one or more fiber vee-grooves and/or input mirrors) to each of the optical fiber coils 84, 86, 88, 90, 92.

In an exemplary embodiment, the multiplexer 83 directs input light beams to each of the optical fiber coils 84, 86, 88, 90, 92 and receives output light beams from the optical fiber coils 84, 86, 88, 90, 92 having circulated through each of the optical fiber coils 84, 86, 88, 90, 92. The multiplexer 83 may produce multiple input light beams for simultaneous transmission to each of the optical fiber coils 84, 86, 88, 90, 92 or may time-division multiplex an input light beam to each of the optical fiber coils 84, 86, 88, 90, 92. The output light beams are each directed to one or more input mirrors to produce a light output, from which a resonance lineshape may be determined, and may be directed back to the corresponding optical fiber coil to complete a resonator optical path. The input light beams are each scanned across to the resonance frequency of the corresponding optical fiber coil 84, 86, 88, 90, 92. As previously mentioned, this may also be accomplished using a fixed average input light frequency and scanning the length of each of the resonator pathlengths, thus scanning through the resonance lineshape. Each of the optical fiber coils has an indicator embedded therein that reacts to a different chemical/biological agent. In another exemplary embodiment, one of the optical fiber coils (e.g., the optical fiber coil 92) is embedded with a dopant that darkens when irradiated with nuclear radiation. A change in the resonance lineshape width associated with the light output of a particular optical fiber coil 84, 86, 88, 90, 92 indicates the presence of the corresponding chemical/biological agent or the presence of nuclear radiation. Using the sensor 80, multiple chemical/biological agents and nuclear radiation may be detected using a single device with a common output interface. The sensor 80 may additionally include a wireless transmitter for transmitting detection data.

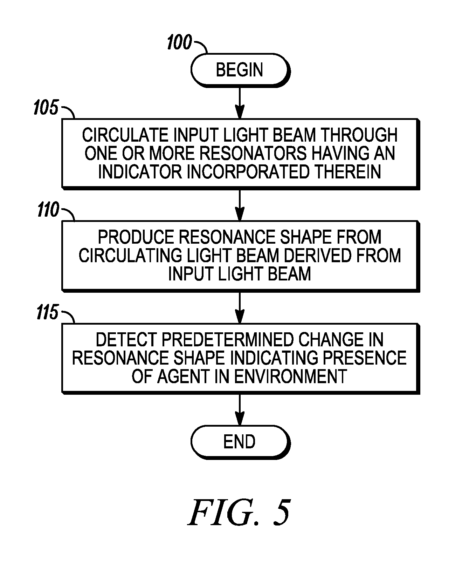

FIG. 5 is a flow diagram of a method 100 for sensing one or more agents in an environment in accordance with another exemplary embodiment of the present invention. An input light beam is circulated through at least one resonator, as indicated at step 105. Each resonator has an optical fiber coil (e.g., the optical fiber coils 84, 86, 88, 90, 92 shown in FIG. 4). Each of the optical fiber coils has an indicator incorporated therein that reacts with a different agent (e.g., chemical/biological agent) or has a dopant that darkens with nuclear radiation. In one exemplary embodiment, a first light beam is circulated through a first optical fiber coil and a second light beam is circulated through a second optical fiber coil. The first optical fiber coil has a first indicator embedded therein that reacts with a first agent (e.g., serin), and the second optical fiber coil has a dopant that darkens with nuclear radiation. In another exemplary embodiment, light is directed into the first end of the optical fiber coil and emerges from the second end of the optical fiber coil where the light is reflected back into the second end of the first optical fiber coil, such as via output mirror 60 shown in FIG. 2. A portion of the light emerging from the first end of the optical fiber coil is directed back into the first end of the optical fiber coil, such as via input mirror 48 shown in FIG. 2. In yet another exemplary embodiment, light is directed into the first end of the optical fiber coil by an input mirror and emerges from the second end of the optical fiber coil where the light is received by an optical element (e.g., the output element 72 shown in FIG. 3). The optical element directs the light emerging from the second end of the optical fiber coil to an output mirror (e.g., the output mirror 76 shown in FIG. 3), and the output mirror reflects the light from the optical element to the input mirror. The input mirror directs a portion of the light from the output mirror into the first end of the first optical fiber coil.

A resonance shape is produced from a circulating light beam derived from the input light beam, as indicated at step 110. When determining the resonance lineshape from the light circulating in the optical fiber coil, the input light beam is scanned acoss the resonance lineshape of the resonator containing the sensitive optical fiber coil. A predetermined change in the resonance shape is detected, as indicated at step 115. The change may be a predetermined amount of energy loss represented in the resonance lineshape. The predetermined change indicates the presence of the agent in the environment.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. An apparatus for sensing an agent in an environment, the apparatus comprising:
a resonator (12) having a resonance frequency and comprising an optical fiber coil (28), said optical fiber coil (28) comprising a cladding and an indicator embedded in said cladding, said indicator configured to react to a first agent (30) of the one or more agents, said resonator (12) configured to:
propagate an input light through said optical fiber coil (28); and
produce a resonance shape centered at said resonance frequency, said
resonance shape measured by said input light, a predetermined change in said resonance shape indicating a presence of the first agent (30) in the environment.

2. An apparatus according to claim 1, wherein said resonator (12) further comprises a fiber optic coupler (24) spliced to said optical fiber coil (28), said fiber optic coupler (24) configured to receive said input light and further configured to transmit an output light from said optical fiber coil (28), said output light indicating said resonance shape.

3. An apparatus according to claim 2, wherein said resonator (12) is selected from a linear resonator (41) and a ring resonator (12).

4. An apparatus according to claim 1 further comprising:
a light source (18) configured to produce said input light;
a first reflector (20) configured to receive said input light from said light source (18) and further configured to transmit said input light to said resonator (12);
a second reflector (22) configured to receive an output light from said resonator (12); and
a photodetector (26) configured to detect said resonance shape from said output light.

5. An apparatus according to claim 4, wherein said resonator (12) comprises an input mirror (24) configured to receive said input light from said first reflector (20) and further configured to direct a circulating light into said optical fiber coil (28), said circulating light derived from said input light.

6. An apparatus according to claim 5 further comprising a substrate (14), said light source (18), said first and second reflectors (20, 22), said photodetector (26), and said input mirror (24) formed on said substrate (14).

7. An apparatus according to claim 1, wherein the first agent (30) is an airborne substance.

8. An apparatus according to claim 1, wherein said optical fiber coil (28) comprises first and second ends (52, 56), the apparatus (10) further comprising:
a light source (42) configured to produce a light beam;
a beam splitter (44) configured to produce said input light from said light beam;
an input element (46) configured to direct a portion of said input light from said beam splitter (44) into said first end (52) of said optical fiber coil (28);
an output element (60) configured to reflect a circulating light beam from said second end (56) of said optical fiber coil (28) to said second end (56) of said optical fiber coil (28), said circulating light beam derived from said input light, said input element (46) further configured to reflect a portion of said circulating light beam from said first end (52) of said optical fiber coil (28) into said first end (52) of said optical fiber coil (28), said beam splitter (44) further configured to receive an output light from said input element (46), said output light derived from said circulating light beam; and
a photodetector (62) configured to detect said resonance shape from said output light.

9. An apparatus according to claim 1, wherein said optical fiber coil (28) comprises first and second ends (52, 56), the apparatus further comprising:
a light source (42) configured to produce an input light;
a first reflector (48) configured to transmit a portion of said input light from said light source (42) into said first end (52) of said optical fiber coil (28);
a second reflector (76) configured to direct a circulating light beam from said second end (56) of said optical fiber coil (28) to said first reflector (48), said circulating light beam derived from said input light, said first reflector (48) further configured to direct a portion of said circulating light beam into said first end (52) of said optical fiber coil (28), said second reflector (76) further configured to transmit an output light from said resonator (12), said output light derived from said circulating light beam; and
a photodetector (62) configured to detect said resonance shape from said output light.

10. A method for sensing one or more agents in an environment, the method comprising the steps of:
propagating an input light beam through at least one fiber resonator (12) having an indicator incorporated therein, the indicator configured to react with one agent (30) of the one or more agents;
producing a resonance shape from a circulating light beam, the circulating light beam derived from the input light beam; and
detecting a predetermined change in the resonance shape, the predetermined change indicating a presence of the first agent (30) in the environment.
